# EUROPEAN PATENT SPECIFICATION

(11) **EP 1 689 630 B1**
(45) Date of publication and mention of the grant of the patent: **11.07.2007**
(21) Application number: 04793807.1
(22) Date of filing: 20.10.2004
(51) Int. Cl.: B62B 9/28

(54) **STANDING BOARD**
FUSSPLATTFORM
MARCHEPIED

(30) Priority: 29.10.2003 SE 0302854
(43) Date of publication of application: 16.08.2006
(73) Proprietor: LUNDH, Jöran, S-554 66 Jönköping (SE)
(72) Inventor: LUNDH, Jöran, S-554 66 Jönköping (SE)
(74) Representative: Arwidi, Bengt
(86) International application number: PCT/SE2004/001504
(87) International publication number: WO 2005/039953

(56) References cited:
- WO-A1-00/69699
- DE-A1- 19 849 261
- DE-U1- 20 306 242
- GB-A- 2 328 907

## Description

### Technical Area

The present invention concerns a transport device for use with prams and buggies, and especially a standing board according to the preamble of claim 1 and shown by WO 0069699 A1.

### Technical Background

A situation that has been hard to handle is when a parent needs to go out with a small child in a buggy and another child who either cannot or will not walk the entire distance to be covered. This has been solved in a good way with so-called standing boards, comprising a platform on wheels connected to a buggy for safe, comfortable, fast, fun transportation of accompanying children. The child can stand on the standing board, which is connected to the buggy. The board is usually designed to be fastened to the rear axle of the buggy and the child stands between the buggy's basket and the buggy's handle. It is also possible to use the standing board to transport certain goods and for similar purposes.

The board is supported partly by the attachment to the buggy's chassis or axle and partly by two wheels placed near the board's rear edge. The wheels on the board are arranged so that they can pivot about a vertical axis.

There is a need for a transport device with an improved fastening device between the buggy and the standing board.

### Summary of the Invention

One objective of the present invention is to produce an improved fastening device.

This objective is achieved with the device in accordance with the attached claims.

In accordance with one aspect of the present invention, a device is produced for a standing board for connection to buggies, prams, etc., comprising a board, wheels and means for connecting the board to buggies/prams, comprising two arms which are oriented diagonally forwards in the normal direction of travel of the standing board. The arms comprise means so that the mounting arms are connected to the board and can be moved mainly horizontally, perpendicularly to the direction of travel of the standing board. The mounting arms are connected to the board by means of a transverse bar along which the mounting arms can be moved. The bar can pivot around its axis in relation to the board and the mounting arms are designed to follow the bar's rotational movement and comprise at least two parts that can be moved longitudinally in relation to each other.

The standing board also comprises means for releasing the bar for rotation and for locking the bar in one of several positions. The means for releasing and locking the bar are located in connection with the front corner of the standing board.

Using this device, a standing board can easily be connected to a buggy and be adjusted as required even if the buggy in question has an unusual design or a design that makes it difficult to connect the standing board to the buggy's chassis.

### Brief Description of the Drawings

A preferred embodiment of the invention will now be described in further detail with reference to the drawings.

These and other distinctive features and advantages will be clearly stated in a subsequent detailed description of an embodiment of the invention, in connection with the attached drawings.

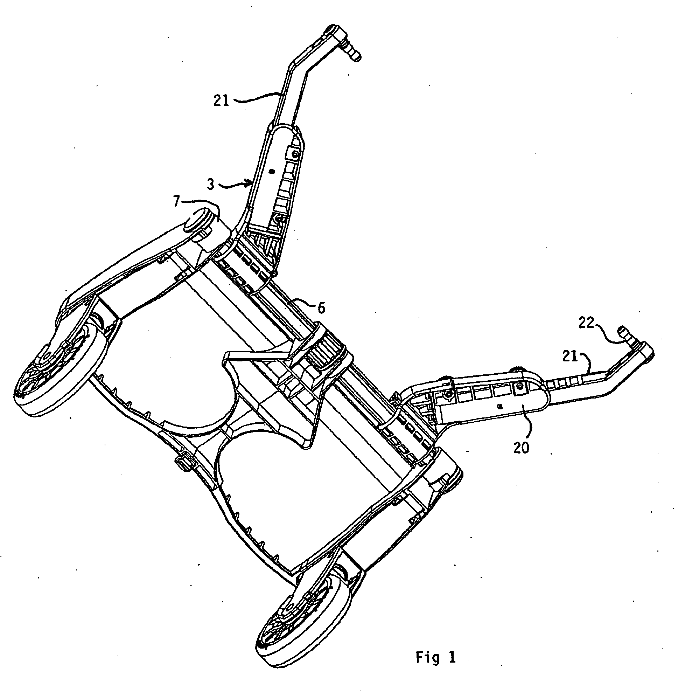

Figure 1 shows a perspective view of a standing board in accordance with the present invention.

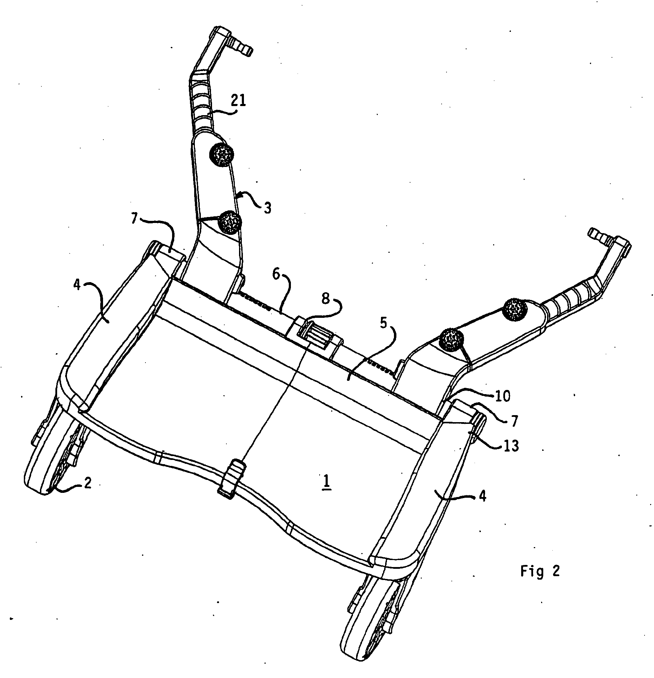

Figure 2 shows another perspective view in accordance with the present invention.

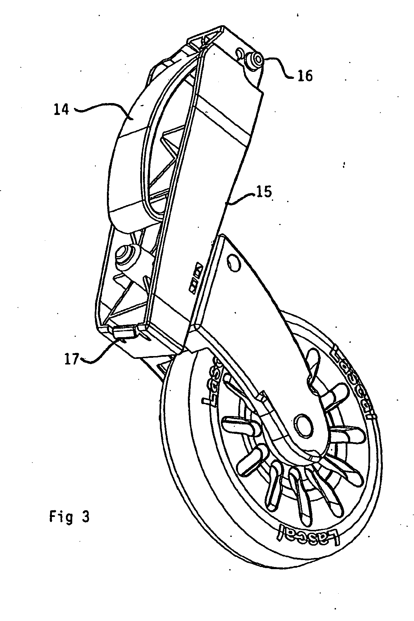

Figure 3 shows a perspective view of the lever with a compound spring and wheel with associated suspension in accordance with the present invention.

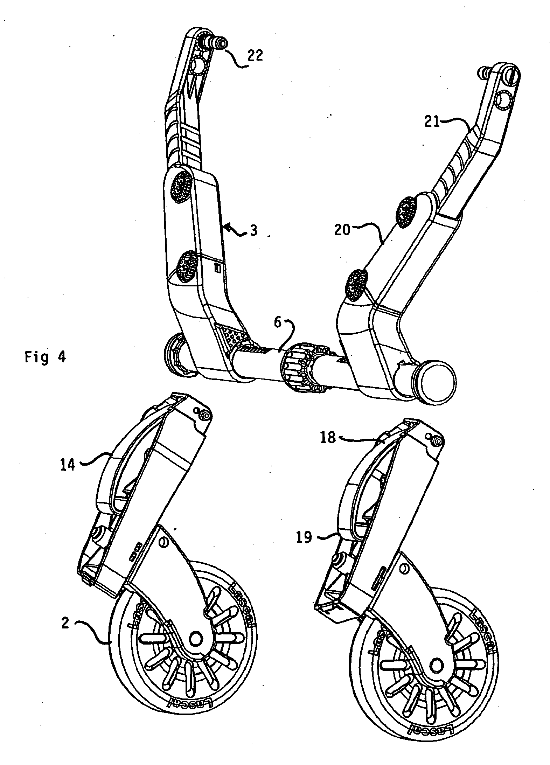

Figure 4 shows a perspective view of the lever with a compound spring and wheel with associated suspension and a bar with mounting arms attached to it in accordance with the present invention.

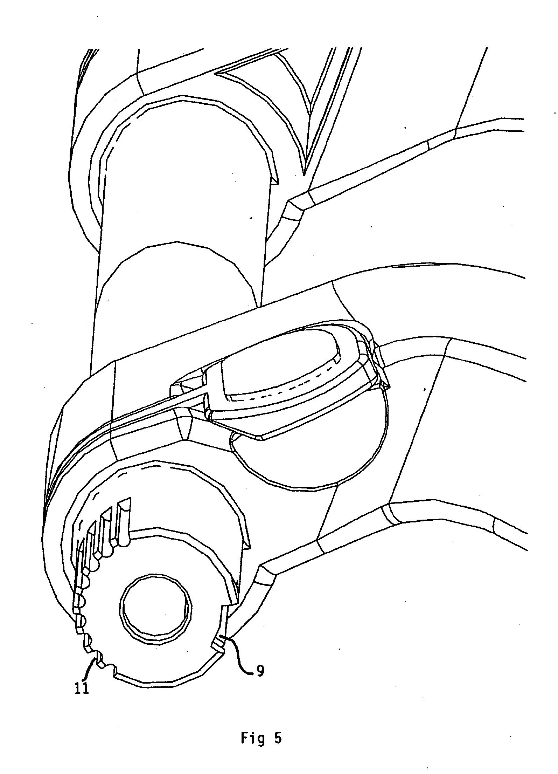

Figure 5 shows an enlarged perspective view of parts of the bar, a mounting arm and a lever in accordance with the present invention.

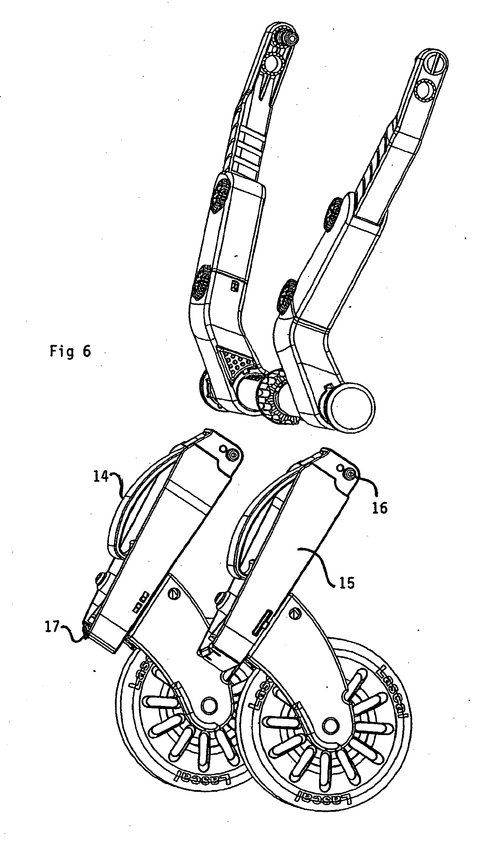

Figure 6 shows another perspective view of the lever with a compound spring and wheel with associated suspension and a bar with mounting arms attached to it in accordance with the present invention.

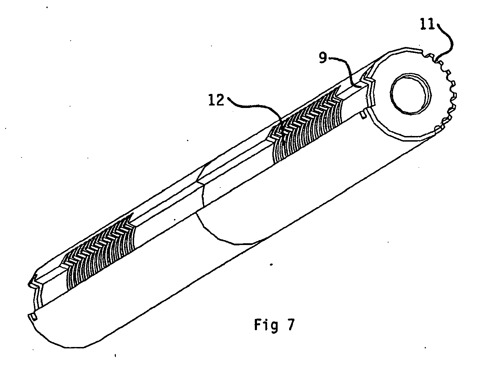

Figure 7 shows a perspective view of the bar in accordance with the present invention.

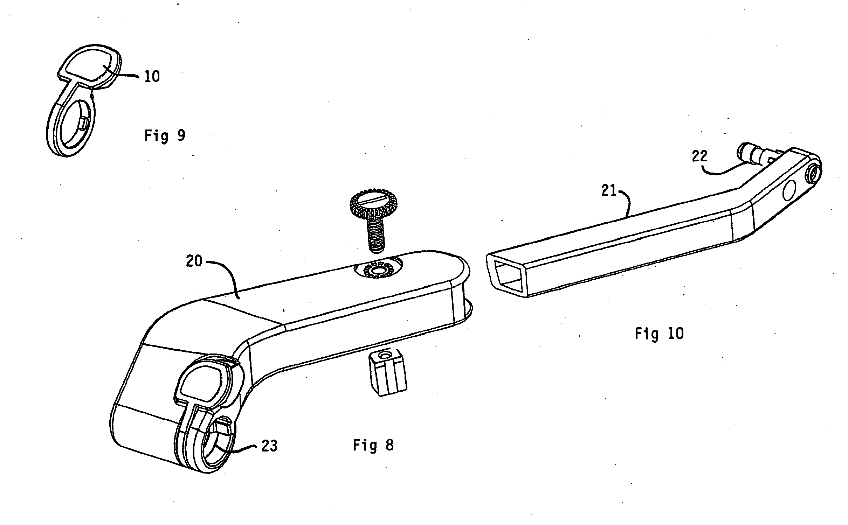

Figure 8 shows the first part of the mounting arm in accordance with the present invention.
Figure 9 shows a locking device for the first part of the mounting arm in accordance with the present invention.
Figure 10 shows the second part and third part of the mounting arm in accordance with the present invention.

### Detailed Description of the Invention

The standing board comprises a board 1 with at least two downward-directed wheels 2 and at least one mounting arm 3. The board 1 comprises four slightly rounded corners. The wheels 2 are arranged preferably at two of the board's 1 corners, one at each corner, which allows the standing board to roll on a base. Along the front side of the board 1, there are preferably two mounting arms 3, which allow the standing board to be connected to a buggy.

There are borders 4 at two of the board's 1 edges and there is another border 5, a ridge, at the front edge of the board 1 to prevent the feet of a child standing on the board from slipping off the board 1 of the standing board towards the buggy to which the standing board is attached or to the sides. In the situations that can arise when the standing board is moving, for example down or up a slope or over an uneven base, and a child is standing on the standing board, the two borders 4 and the front ridge 5 effectively prevent the child's feet from sliding off the standing board.

In front of the front ridge 5, in the direction of travel of the standing board, there is a transverse bar 6 with three mounting points. The transverse bar 6 is attached at two outer mounting points 7 at its two ends to the front two corners of the board 1. The mounting points 7 are in extension of the borders 4 in the direction of travel of the standing board. The transverse bar 6 also passes through a third central mounting point 8 which reinforces the centre of the bar 6. On each side of the central mounting point 8, the bar 6 is thus exposed and allows the mounting arms 3 to be arranged along the bar 6 on each side of the central mounting point 6.

Mainly along the longitudinal direction of the bar 6 is at least one notch 9 arranged with a corresponding pin on the mounting arm 3. The notch 9 locks the mounting arm 3 to the bar 6 and prevents the mounting arm 3 from moving around the bar 6. The notch 9 also allows the mounting arm 3 to be moved along the longitudinal direction of the bar 6. The mounting arm 3 also comprises a locking device for locking the stated movement in the longitudinal direction of the bar 6.

The locking device consists of a button 10 with a lock at its other end that, with normal use of the standing board, locks the mounting arm 3 to the bar 6 and thus prevents the mounting arm 3 from being moved in the longitudinal direction of the bar 6. To open the locking device and thus release the mounting arm 3, the button 10 is pressed, which then releases the grip on the bar 6, comprising a groove 12 for engagement.

At both ends of the bar 6, there are one or more notches 11 from the ends of the bar 6 in along the bar 6 in its longitudinal direction. The notches 11 along the longitudinal direction of the bar 6 and internal shoulders (not shown) in the fastening device in extension of the border 4 lock the bar 6 and prevent the bar 6 from freely rotating around its own longitudinal axis. The shoulders engage in one or more notches 11 and thus lock the rotational movement of the bar 6. To pivot the bar 6 around its own axis, the bar's 6 lock is released by acting on the shoulders by pressing a button 13 located on the borders 4 so that the shoulders are released from the notches 11, after which the bar 6 is free to pivot.

When the above-mentioned bar 6 is released from the lock, the bar is able to move around its own axis, which also means that the mounting arms 3 are able to move vertically.

The button 13 is connected to the shoulders, which are raised when the button 13 is pressed. As an alternative embodiment of the button 13, it is also possible to use a device that releases the shoulders by lifting a device that releases the engagement of the shoulders in the notches 11.

It is also possible, instead of the button 13, to arrange a corresponding locking device on the mounting arms.

When the bar 6 is free, it is possible to move the mounting arms 3 upwards and downwards. Upward and downward movement here means that the mounting arms 3 can move in a direction at an angle to the plane of the standing board.

The two borders 4, which surround the board 1 of the standing board, are mainly hollow with openings down towards their lower side. Lower side means the surface of the standing board that, during use, faces the surface with which the wheels 2 of the standing board are in contact. The border's 4 hollow space contains a compound spring 14 and a lever 15. The wheel is mounted on the mobile lever 15.

The wheel 2 is supported by a device that is mounted on the mobile lever 15 and can pivot. The wheel 2 with associated fastening device is arranged with a mainly vertical axis, the second end of which is arranged at the mobile lever 15, the first end of which is arranged inside the front end of the border 4. At the first end of the lever 15, there is at least one protruding spike 16 that connects the lever 15 to the inside of the border 4, which thus gives the lever 15 its fixed point. The second end of the lever 15 can be raised and lowered, which allows the second end of the lever 15 to move between at least two positions. At the second end of the lever 15, there is also a wheel 2. At the second end of the lever 15, there is also a stop 17 to prevent the lever 15 from moving out of its position within the border 4. This gives the lever 15 a lower position and an upper position, between which the lever 15 is consequently designed to move. The compound spring 14 comprises a first end 18 and a second end 19 and mainly lies with its curve upwards, i.e. the centre of the compound spring 14 is usually the highest point and its two ends, 18, 19, are partially directed downwards, in relation to the centre of the compound spring 14, towards the base with which the wheels 2 of the standing board are in contact during use.

The first end 18 of the compound spring 14 is arranged at the first end of the lever 15 and is designed so that it gives the compound spring 14 elastic flexibility in connection with external impact on the compound spring 14. The second end 19 of the compound spring 14 is arranged in such a way that it lies against the lever 15, which allows the compound spring 14 to move. In another embodiment, it is also possible to fasten the first end of the compound spring 14 at the second end of the lever 15, or to fasten the compound spring 14 at the centre of the lever 15 with a central mounting without fastening the compound spring 14 at either end of the lever 15.

In normal operation, the centre of the compound spring 14 lies against the inside of the border 4 to resist the force pressing the mobile part of the lever 15 upwards.

When the lever 15 is under load, the compound spring 14 also has an effect. Its second end 19 is pressed upwards as the compound spring's 14 first end 18 is attached to the lever 15 at the front ridge 5. When the lever 15 moves upwards, the compound spring 14 is pressed up against the inside of the border 4, with the result that, while the compound spring 14 is compressed and counteracts the compression, the lever 15 gently damps the movement, which consequently also damps the upward movement of the wheel 2. At the same time as the gentle damping of the wheel 2, the compound spring 14 will also return to its normal original position, with the result that the wheel 2 returns back to its lower position when the upward force decreases. The gentle damping and returning back results in the standing board effectively and gently absorbing all irregularities in the base over which the standing board is transported, including the fast changes in load to which the standing board is subjected.

Usually, it is the weight of a child that forces the wheel 2 upwards, but this may also be another object, for example a carrier bag full of food or similar.

With the compound spring 14 and its mobile front mounting, it is consequently possible for the wheel 2 to follow the irregularities in the base without clattering or losing continuous contact with the base.

The principal task of the mounting arm 3 is to connect the standing board to a buggy. The mounting arm 3, in accordance with the present invention, also provides increased flexibility and offers a virtually unlimited number of adjustment options.

The mounting arms 3 are mounted on the standing board in accordance with the present invention in such a way that they can be moved horizontally in relation to the board 1 and, during use, they are fixed in relation to the board 1. To this end, the mounting arms 3 are fastened to the bar 6, which, in turn, is mounted on the board 1.

The mounting comprises at least one movable mounting arm 3, which can assume a number of different positions along the horizontal bar 6 that is arranged at the front edge of the standing board towards the buggy.

The device is preferably arranged with at least two mounting arms 3, which are preferably arranged along the bar 6.

The mounting of the mounting arm 3 can be moved horizontally along the bar 6 in order to be locked to the bar 6 in the appropriate position.

The mounting arm 3 comprises several assembled parts, such as a first part 20, a second part 21 and a third part 22.

The first part 20 is attached to the bar 6 in such a way that it can move and allows horizontal movement along the bar 6.

At the first end of the first part 20, there is a continuous transverse hole 23, which allows the first part 20, during assembly, to be threaded onto the transverse bar 6. The first part 20 is appropriately angled somewhat in order to increase the options when mounting the standing board on a buggy, the width of which varies greatly across the range of models available.

At the second end of the first part 20 of the mounting arm 3, there is an opening with a longitudinal internal channel that extends back towards the end at the bar 6. The internal channel allows the second part 21 to be inserted in the channel and locked to the first part 20 with a suitable lock 25.

At the second end of the first part 20 of the mounting arm 3, the second part 21 of the mounting arm 3 has a mounting between the first part 20 and second part 21, which allows the mounting arm 3 to assume a number of different lengths. The second part 21 is angled somewhat in order to provide straighter mounting between the second part 21 and a buggy. At the second end of the second part 21 is the third part 22, a small device 22 designed for mounting the second part 21 on a buggy with a fastening device. The device 22 is preferably arranged mainly perpendicularly to the direction of the second part 21.

However, it is possible, in another embodiment, to design the second part 21 and the device 22 with other mutual angles. However, the idea of the invention is to give the device 22 a suitable angle to allow wide variation for attaching the standing board to a buggy. It is expedient to connect the buggy and the standing board's fastening device from the side of the buggy's direction of travel and inwards, which simplifies the connection between them. However, it is not necessary and this operation can also be carried out from other directions.

The second part 21 of the mounting arm 3 comprises several possible mountings for the device 22. The mountings consist of openings from the side that extend through the entire second part 21. The openings for mounting the device 22 on the second part 21 allow the device 22 to be fastened to the second part 21 at a number of different lengths from the standing board. To release the mounting arm 3 from the standing board or to adjust its position, the button 10 on the mounting arm's 3 first part 20 is pressed, thus releasing the mounting arm 3 from the lock, which allows the mounting arm 3 to be moved sideways along the longitudinal direction of the bar 6. In this way, it is possible to vary the distance between the mounting arms 3 and consequently adjust the mounting arms 3 to the appropriate width, preferably to the width of the buggy with which the standing board is to be used.

In accordance with another alternative embodiment, it is also possible to make the board of the standing board mainly rounded, i.e. its shape is generally more round than square.

In accordance with another alternative embodiment, it is also possible to use a bar that is divided, i.e. that consists of two separate bars arranged in each other's longitudinal direction, with the central mounting point as a common mounting point.

It is also possible to design the bar with different cross-sections and also to design one bar with several different cross-sections, depending on where on the bar the different cross-sections are required. For example, it is possible to design the bar with a circular cross-section at the mountings on the board and a square cross-section for the parts where the mounting arms are moved.

The mounting arm comprises an adjustable part which can be adjusted sideways, but it is not necessary to arrange the mounting arms along one bar. It is also possible to arrange the mounting arms along two bars. It is also possible to arrange the mounting arms along several more or less parallel axes. The bar can also be replaced by a sliding strip or similar with the same properties as a bar or a tube.

In accordance with another alternative embodiment, it is also possible to arrange locking of the mounting arms' movement along the bar's longitudinal direction with a centrally located locking device at the central mounting point. It is also possible to arrange this locking with three locking devices, one centrally and two arranged as stated above.

In yet another alternative embodiment, in connection with the locking of the mounting arm, it is also possible, in order to release the mounting arm from the standing board or adjust its position, to move the mounting arm vertically, thus releasing the mounting arm from the lock and allowing the mounting arm to be slid sideways along the bar's longitudinal direction. This makes it possible to vary the distance between the mounting arms and to adjust it to the appropriate width, preferably to the width of the buggy with which the standing board is to be used.

In accordance with another alternative embodiment, it is also possible, mainly along the longitudinal direction of the bar 6, instead of the notch 9, to design the bar with shoulders and with a corresponding notch or notches on the mounting arm 3. The shoulders lock the mounting arm 3 to the bar 6 and prevent the mounting arm 3 from moving around the bar 6, while the shoulders allow the mounting arm 3 to be moved along the longitudinal direction of the bar 6.

In accordance with another alternative embodiment, it is possible to design the button 10 partly as a device that is pressed to release the lock and partly as a device for the button that is also intended to be lifted and thus to release the locking device. The inventive idea, in accordance with the present invention, is not limited by how the lock is released.

## Claims

1. A standing board for connection to buggies, prams, etc., comprising a board (1), wheels (2) and means for connecting the board (1) to buggies/prams, comprising two mounting arms (3), which are directed diagonally forwards in the normal direction of travel of the standing board, **characterised in that** the mounting arms (3) are connected to the board (1) such that they can be moved relative to the board (1) mainly horizontally, perpendicularly to the direction of travel of the standing board.

2. A standing board in accordance with claim 1, on which the mounting arms (3) are connected to the board (1) by means of a transverse bar (6) along which the mounting arms (3) can be moved.

3. A standing board in accordance with claim 2, on which the bar (6) can pivot around its axis in relation to the board (1), and the mounting arms (3) are designed to follow the rotational movement of the bar (6).

4. A standing board in accordance with any of the preceding claims, on which the mounting arms (3) comprise at least two parts (20, 21), which can be moved longitudinally in relation to each other.

5. A standing board in accordance with any of claims 2 - 3, on which the bar (6) is a tube.

6. A standing board in accordance with any of the preceding claims when dependent on claim 2, on which the standing board comprises means to release the bar (6) for rotation and to lock the bar (6) in one of several positions.

7. A standing board in accordance with any of the preceding claims when dependent on claim 2, on which the bar (6) comprises means to release the bar (6) for rotation and to lock the bar (6) in one of several positions.

8. A standing board in accordance with claim 6, on which the standing board's means for releasing and locking the bar (6) are located in connection with the front corners of the standing board.

9. A standing board in accordance with claim 6, on which the standing board's means for releasing and locking the bar (6) are located in connection with the standing board's central mounting point (8).

## Patentansprüche

1. Stehbrett zum Anschluss an Buggies, Kinderwagen etc., mit einem Brett (1), Rädern (2) und Mitteln zum Verbinden des Bretts (1) an Buggies/Kinderwagen, mit zwei Montagearmen (3), welche diagonal nach vorne in der normalen Bewegungsrichtung des Stehbretts gerichtet sind,
**dadurch gekennzeichnet, dass** die Montagearme (3) mit dem Brett (1) derart verbunden sind, dass sie relativ zu dem Brett (1), hauptsächlich horizontal, senkrecht zur Bewegungsrichtung des Stehbretts, bewegt werden können.

2. Stehbrett nach Anspruch 1, auf welchem die Montagearme (3) mit dem Brett (1) mittels einer Querstange (6) verbunden sind, entlang welcher die Montagearme (3) bewegt werden können.

3. Stehbrett nach Anspruch 2, auf welchem die Stange (6) um ihre Achse in Bezug zu dem Brett (1) schwenken kann, und die Montagearme (3) so ausgebildet sind, dass diese der Drehbewegung der Stange (6) folgen.

4. Stehbrett nach einem der vorstehenden Ansprüche, aus welchem die Montagearme (3) wenigstens zwei Teile (20, 21) umfassen, welche in Bezug zueinander in Längsrichtung bewegt werden können.

5. Stehbrett nach einem der Ansprüche 2 bis 3, auf welchem die Stange (6) ein Rohr ist.

6. Stehbrett nach einem der vorstehenden Ansprüche, wenn diese abhängig von Anspruch 2 sind, auf welchem das Stehbrett Mittel umfasst, um die Stange (6) zur Drehung freizugeben und die Stange (6) in einer von mehreren Positionen zu verriegeln.

7. Stehbrett nach einem der vorstehenden Ansprüche, wenn diese abhängig von Anspruch 2 sind, auf welchem die Stange (6) Mittel umfasst, um die Stange (6) für eine Drehung freizugeben und die Stange (6) in einer von mehreren Positionen zu verriegeln.

8. Stehbrett nach Anspruch 6, auf welchem die Mittel des Stehbretts zum Freigeben und Verriegeln der Stange (6) in Verbindung mit den Vorderecken des Stehbretts angeordnet sind.

9. Stehbrett in Übereinstimmung mit Anspruch 6, in welchem die Mittel des Stehbretts zum Freigeben und Verriegeln der Stange (6) in Verbindung mit dem zentralen Montagepunkt (8) des Stehbretts angeordnet sind.

## Revendications

1. Marchepied pour la liaison à des poussettes, des landaus, etc., comprenant une embase (1), des roues (2) et un moyen pour relier l'embase (1) aux poussettes/landaus, comprenant deux bras de montage (3) qui sont dirigés en diagonale vers l'avant dans la direction perpendiculaire de déplacement du marchepied, **caractérisé en ce que** les bras de montage (3) sont reliés à l'embase (1) de sorte qu'ils peuvent être déplacés par rapport à l'embase (1) principalement horizontalement, perpendiculairement à la direction de déplacement du marchepied.

2. Marchepied selon la revendication 1, dans lequel les bras de montage (3) sont reliés à l'embase (1) au moyen d'une traverse (6) le long de laquelle les bras de montage (3) peuvent être déplacés.

3. Marchepied selon la revendication 2, dans lequel la traverse (6) peut pivoter autour de son axe par rapport à l'embase (1) et les bras de montage (3) sont conçus pour suivre le mouvement de rotation de la traverse (6).

4. Marchepied selon l'une quelconque des revendications précédentes, dans lequel les bras de montage (3) comportent au moins deux parties (20, 21) qui peuvent être déplacées longitudinalement l'une par rapport à l'autre.

5. Marchepied selon l'une quelconque des revendications 2-3, dans lequel la traverse (6) est un tube.

6. Marchepied selon l'une quelconque des revendications précédentes, lorsqu'elle est dépendante de la revendication 2, dans lequel le marchepied comprend des moyens pour libérer la traverse (6) pour la rotation et pour bloquer la traverse (6) dans une de plusieurs positions.

7. Marchepied selon l'une quelconque des revendications précédentes, lorsqu'elle est dépendante de la revendication 2, dans lequel la traverse (6) comprend des moyens pour libérer la traverse (6) pour la rotation et pour bloquer la traverse (6) dans une de plusieurs positions.

8. Marchepied selon la revendication 6, dans lequel les moyens du marchepied pour libérer et bloquer la traverse (6) sont situés en liaison avec les coins avant du marchepied.

9. Marchepied selon la revendication 6, dans lequel les moyens du marchepied pour libérer et bloquer la traverse (6) sont situés en liaison avec le point de montage central (8) du marchepied.
